# EUROPÄISCHE PATENTSCHRIFT

(11) **EP 1 572 494 B1**
(45) Veröffentlichungstag und Bekanntmachung des Hinweises auf die Patenterteilung: **29.08.2007**
(21) Anmeldenummer: 03785745.5
(22) Anmeldetag: 05.12.2003
(51) Int. Cl.: B60N 2/48

(54) **CRASHAKTIVE KOPFSTÜTZE**
CRASH-ACTIVE HEAD REST
APPUI-TETE ACTIF EN CAS DE CHOC

(30) Priorität: 21.12.2002 DE 10260582; 04.11.2003 DE 10351367
(43) Veröffentlichungstag der Anmeldung: 14.09.2005
(73) Patentinhaber: KEIPER GmbH & Co. KG, 67657 Kaiserslautern (DE)
(72) Erfinder: SCHILLING, Jürgen, 67659 Kaiserslautern-Erlenbach (DE); BÖHMER, Michael, 67806 Rockenhausen (DE); HIPPEL, Daniel, 67722 Winnweiler (DE); WROBEL, Darius, 67657 Kaiserslautern (DE); KLEIN, Harald, 66909 Matzenbach (DE); RUESS, Georg, 66851 Oberarnbach (DE); RIHLMANN, Ali, Peter, 67663 Kaiserslautern (DE)
(74) Vertreter: Patentanwälte Hosenthien-Held und Dr. Held
(86) Internationale Anmeldenummer: PCT/EP2003/013757
(87) Internationale Veröffentlichungsnummer: WO 2004/056606

(56) Entgegenhaltungen:
- EP-A- 0 976 608
- DE-A- 10 047 406
- DE-A- 19 951 966

## Beschreibung

Die Erfindung betrifft eine Kopfstütze mit den Merkmalen des Oberbegriffs des Anspruches 1.

Aus der DE 199 51 966 A1 ist eine Kopfstütze dieser Art bekannt, bei welcher das Prall-element mittels eines als Parallelogramm ausgebildeten Viergelenks im Crashfall ausfährt, wobei als Antrieb ein federbelasteter Schwenkarm dient, welcher in der Crashstellung verriegelt.

Die nachveröffentlichte, lediglich im Sinne des Artikels 54(3) und (4) EPÜ zum Stand der Technik gehörende EP 1 431 109 A1 zeigt eine pyrotechnisch aktivierbare Kopfstütze mit einem Fünfgelenk und gekreuzten Schwingen. Die ebenfalls nachveröffentlichten WO 2004/014688 A1 und WO 2004/039626 A1 zeigen ebenfalls pyrotechnisch aktivierbare Kopfstützen, deren Viergelenke Schwingen mit unterschiedlichen Längen aufweisen.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Eine Ausbildung des Energiespeichers als gespannte Feder hat den Vorteil, dass mit einer solchen Feder genügend Energie für ein rasches Ausfahren des Viergelenks gespeichert werden kann. Durch obere und untere Schwingen, welche eine von der Parallelität abweichende Ausrichtung zueinander einnehmen, also durch ein von der Parallelogrammform abweichendes Viergelenk, wird das System der Kopfstütze stabilisiert. Dadurch wird in der Ausgangsstellung ein Totpunkt im Viergelenk vermieden, welcher das Ausfahren im Crashfall erschweren könnte. Des weiteren kann der bei Kräften von vorne oder von oben auf die Schwingen wirkende relevante Hebelarm kurz gehalten werden. Schließlich kann auch ein günstigerer Auffangwinkel erreicht werden. Erreicht wird dies alles vorzugsweise durch unterschiedliche Längen der Schwingen, beispielsweise indem die unteren Schwingen länger als die oberen Schwingen sind, soweit es die Abstände der Gelenke im Viergelenk betrifft. Die langen unteren Schwingen haben noch den Vorteil, dass beim Ausfahren des Viergelenks das auf dem Prallelement vorgesehene Polsterteil sich weitgehend tangential in Fahrtrichtung nach vorne bewegt, was eine einfachere Verblendung erlaubt und Kollisionen im unteren Bereich verhindert.

Ein reversibles Rücksetzen der Kopfstütze nach einem Crash ermöglicht einen erneuten Einsatz der Kopfstütze, was Material- und Werkstattkosten spart. Vorzugsweise kann der Insasse selber die Kopfstütze rücksetzen, was wiederum Werkstattkosten spart. Hierfür ist ein Rücksetzer, beispielsweise ein in der Kopfstütze integriertes, bewegliches Zug-, Druck- oder Drehelement oder ein nach einem Crash in die Kopfstütze einführbares Werkzeug vorgesehen. Der Rücksetzer bringt beispielsweise die Crashsperre - und gegebenenfalls eine Magnetauslösung - zurück in die Ausgangsposition. Ein in die Kopfstütze integrierter Rücksetzer ist vorzugsweise erst nach dem Crash sichtbar, um eine vorzeitige Betätigung auszuschließen. Ein als Werkzeug ausgebildeter Rücksetzer ist vorzugsweise in seiner Längsrichtung in die Kopfstütze einführbar, so dass er eine im wesentlichen längliche Grundform aufweist und damit bei Nichtgebrauch leicht zu verstauen ist. Um die Crashsperre wieder zu öffnen, ist in einer weiteren bevorzugten, einfach ausgebildeten Ausführung am Crashsperrenteil eine Drucktaste vorgesehen.

Das Halten der gespannten Feder mittels einer schwenkbaren Klinke, was direkt oder indirekt durch Halten eines von der Feder beaufschlagten Elementes erfolgt, hat den Vorteil, dass die Feder einerseits im Verhältnis zur Klinke formschlüssig gehalten wird und andererseits durch eine geeignete Ausrichtung der Klinke günstige Hebelverhältnisse geschaffen werden, so dass die Haltekraft gering ausgelegt werden kann. Mittels eines schwenkbar gelagerten Fangblechs, welches von der Feder beaufschlagt und von der Klinke gehalten wird, können durch die Anordnung der Beaufschlagungsstelle der Feder und der Haltestelle der Klinke ebenfalls günstigere Hebelverhältnisse erreicht werden, so dass die Haltekraft der Klinke wiederum geringer ausgelegt werden kann. Das Fangblech beaufschlagt im Crashfall das Prallelement direkt oder indirekt über die Schwingen. Im Normalgebrauch kann es die Crashsperre aufhalten.

Die Klinke wird vorzugsweise durch ein beispielsweise an einem vorgespannten Lagerarm gelagertes, vorzugsweise in Schließrichtung hinter der Klinke eingeschnapptes Rundelement gehalten, beispielsweise eine drehbare Rolle, ein Bolzen oder ein Blech mit kreisförmiger Prägung. Im Crashfall wird das Rundelement vorzugsweise durch einen am Träger angelenkten, vorzugsweise vorgespannter Steuerhebel bewegt, welcher in der Ausgangsstellung vorzugsweise von einem Magneten gehalten wird. Die Seite der Klinke, an welcher das Rundelement anliegt, verläuft möglichst senkrecht zum Lagerarm des Rundelementes, damit die Klinke ein geringes öffnendes Moment auf das Rundelement ausüben kann. Hingegen ist der Steuerhebel vorzugsweise mit dem Lagerarm des Rundelementes auf Mitnahme gekoppelt oder bildet selbst den Lagerarm, um mit möglichst geringerem Kraftaufwand das Rundelement zu bewegen.

Das Rücksetzen gestaltet sich dann besonders einfach, wenn zunächst nur der Steuerhebel von dem am Steuerhebel angreifenden Rücksetzer in die Ausgangsstellung gebracht wird, insbesondere die Crashsperre gelöst und der Steuerhebel wieder zum Magneten gebracht wird. Anschließend kann dann mit beiden Händen gegen die Kraft der Feder die Kopfstütze, genauer gesagt das Prallelement, eingefahren werden, ohne daß weitere zeitgleiche Handgriffe notwendig sind. Während die Feder die Klinke zurückdreht, rollt oder gleitet das Rundelement vorzugsweise an der Klinke entlang, bis die Ausgangsstellung erreicht ist und die Klinke wieder die Feder wenigstens indirekt verriegelt. Eine Entlastung des Steuerhebels kann durch das veriegelte Fangblech erfolgen. Beim Rücksetzen der Kopfstützte, bevor die Klinke das Fangblech hält, trennt das Fangblech vorzugsweise die Crashsperre vom Steuerhebel.

Eine Ausbildung der Kopfstütze für wenigstens eine weitere Komfortstellung, in die sie im Normalgebrauch aus der Ausgangsstellung heraus überführbar ist, hat den Vorteil, daß die prinzipiell gegebene Beweglichkeit der Kopfstütze auch zur Komfortsteigerung eingesetzt werden kann. Dabei kann im Crashfall aus jeder Komfortstellung heraus eine Crashstellung eingenommen werden. Für mehrere Komfortstellungen ist vorzugsweise an wenigstens einer der Schwingen eine Rastleiste vorgesehen, welche in den verschiedenen Komfortstellungen der Kopfstütze mit einer am Träger angeordneten Rastzunge oder Rastnase zusammenwirkt, also kraftschlüssig mit Formschlußanteil. Die Komforteinstellung kann auch stufenlos sein, indem die Sicherung über einen reinen Reibschluß erfolgt.

Mehrere Crashstellungen, die dann durch eine Crashsperre jeweils nach hinten gesperrt sind, haben den Vorteil, daß im Crashfall das sich vorwärts bewegende Prallelement unmittelbar nach Kontakt mit dem sich nach hinten bewegenden Kopf des Insassens gesperrt werden kann. Der Kopf wird dann möglichst weit vorne aufgefangen und erhält keinen zusätzlichen Impuls durch eine ungebremste Kopfstütze. Dies verhindert zusätzliche Belastungen für den Insassen. Für eine einfache und kostengünstige Realisierung einer solchen Crashsperre ist in bevorzugter Ausführung am Träger ein wenigstens teilweise bewegliches Crashsperrenteil und an wenigstens einer der Schwingen oder einem zusammen mit den Schwingen bewegten Bauteil eine Crashsperrenverzahnung vorgesehen, welche in jeder Crashstellung mit dem Crashsperrenteil zusammenwirkt, wobei beispielsweise durch mehrere Zähne mehrere Crashstellungen definiert werden. Durch eine Art Sägezahnform wird die Sperrwirkung auf eine Richtung beschränkt, d.h. die Vorwärtsbewegung des Prallelementes wird nicht behindert. Der Steuerhebel kann vorzugsweise seitliche Ausleger aufweisen, mit welchen er beim Rücksetzen die Crashsperrenteile aus den Crashsperrenverzahnungen aushebt.

Wenn das Prallelement ein Halteelement aufweist und eine schwenkbare, unbelastete Klinke in einer schließenden Stellung das Halteelement hält, im Crashfall freigibt und nach dem Crashfall für einen Reset der Kopfstütze in jeder ihrer möglichen. Stellungen für das Halteelement aufnahmebereit ist, steht eine einfache Sicherung oder Verriegelung des Prallelementes für den Normalfall zur Verfügung, die mit wenigen Bauteilen auskommt. Durch die - in einem gewissen Bereich - freie Bewegungsmöglichkeit der Klinke können Mittel für eine definierte Stellung der Klinke, beispielsweise eine vorspannende Feder oder dergleichen, entfallen, was die Herstellungskosten senkt. Die Aufnahmebereitschaft wird durch die Geometrie der Klinke gewährleistet. So weist die Klinke vorzugsweise eine Anlaufschräge auf, an welche das anlaufende Halteelement in wenigstens einer Stellung der Klinke in Anlage gelangt. Durch die schräge Fläche dreht das Halteelement die Klinke und öffnet sie dabei, so daß das Halteelement in das Klinkenmaul gelangen kann. Das Klinkenmaul weist vorzugsweise eine Lippe auf, an welche das anlaufende Halteelement in wenigstens einer Stellung der Klinke, die dann bereits geöffnet ist, auch direkt in Anlage gelangen kann, um in das Klinkenmaul zu gelangen. Vorzugsweise wird die frei bewegliche Klinke normalerweise, d.h. beim Normalgebrauch der Kopfstütze, durch einen mittels eines Magneten gehaltenen Steuerhebel in ihrer schließenden Stellung gehalten.

Das Halteelement ist vorzugsweise weiträumig in das Prallelement eingelagert, um eine großflächige Kraftübertragung und damit geringe Flächenpressungen zu gewährleisten. So weist das Prallelement vorzugsweise eine Aufnahme für das Halteelement auf, in welche das Halteelement - vorzugsweise mit einem abgekröpften Mittelbereich - formschlüssig einlegbar ist und welche durch einen Deckel schließbar ist. Der vorzugsweise als Feder ausgebildete Energiespeicher beaufschlagt das vorzugsweise metallisch ausgebildete das Halteelement vorzugsweise direkt, so daß auch keine hohen Flächenpressungen zwischen Metall und Kunststoff auftreten.

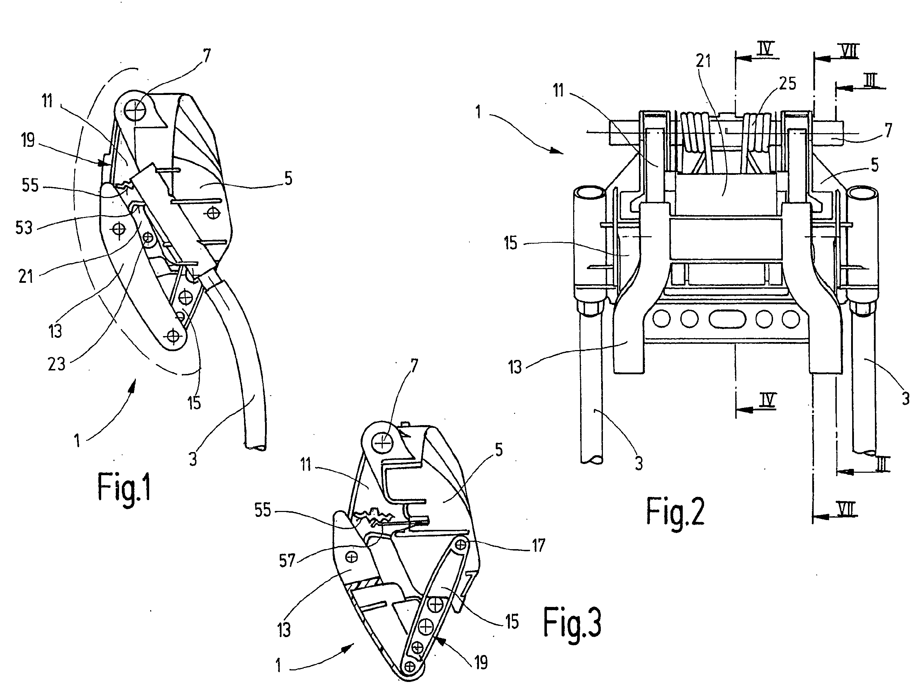

Im folgenden ist die Erfindung anhand von vier in der Zeichnung dargestellten Ausführungsbeispielen näher erläutert. Es zeigen
- Fig. 1: eine Seitenansicht des ersten Ausführungsbeispiels in der Ausgangsstellung mit angedeuteter Polsterung,
- Fig. 2: eine Vorderansicht des ersten Ausführungsbeispiels,
- Fig. 3: einen der Linie III-III in Fig. 2 entsprechenden Schnitt durch das erste Ausführungsbeispiel, welches sich in einer mittleren Komfortstellung befindet,

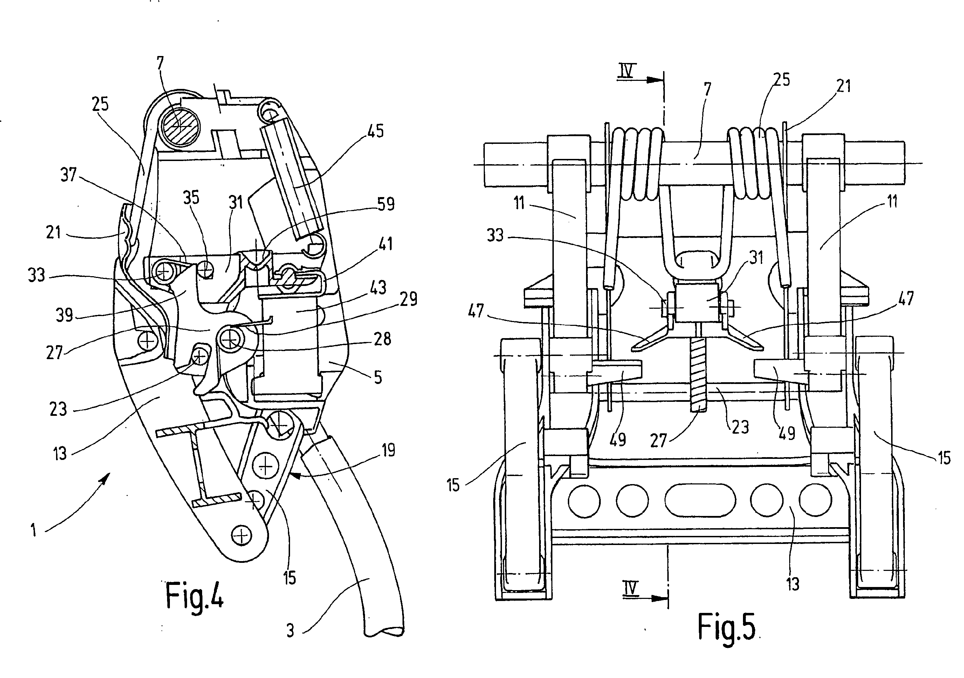

- Fig. 4: einen Schnitt durch das erste Ausführungsbeispiel in der Ausgangsstellung entlang der Linie IV-IV in Fig. 2,
- Fig. 5: eine teilweise geschnittene Rückansicht des ersten Ausführungsbeispiels ohne Träger in der Ausgangsstellung,

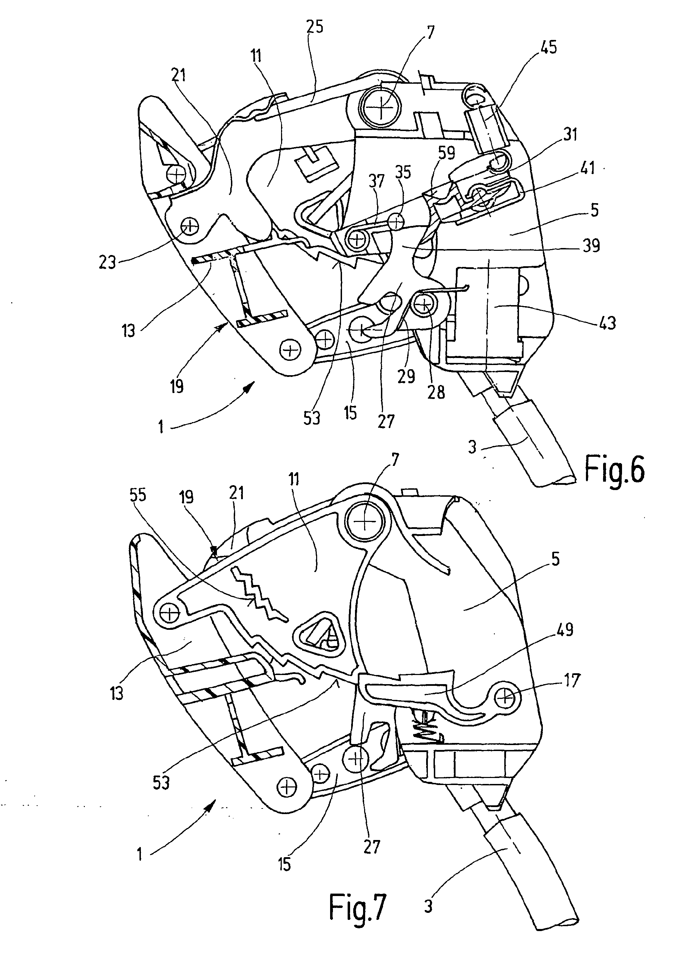

- Fig. 6: einen Schnitt entsprechend Fig. 4 in der vordersten Crashstellung,
- Fig. 7: einen der Linie VII-VII in Fig. 2 entsprechenden Schnitt durch das erste Ausführungsbeispiel, welcher ebenfalls die vorderste Crashstellung zeigt,

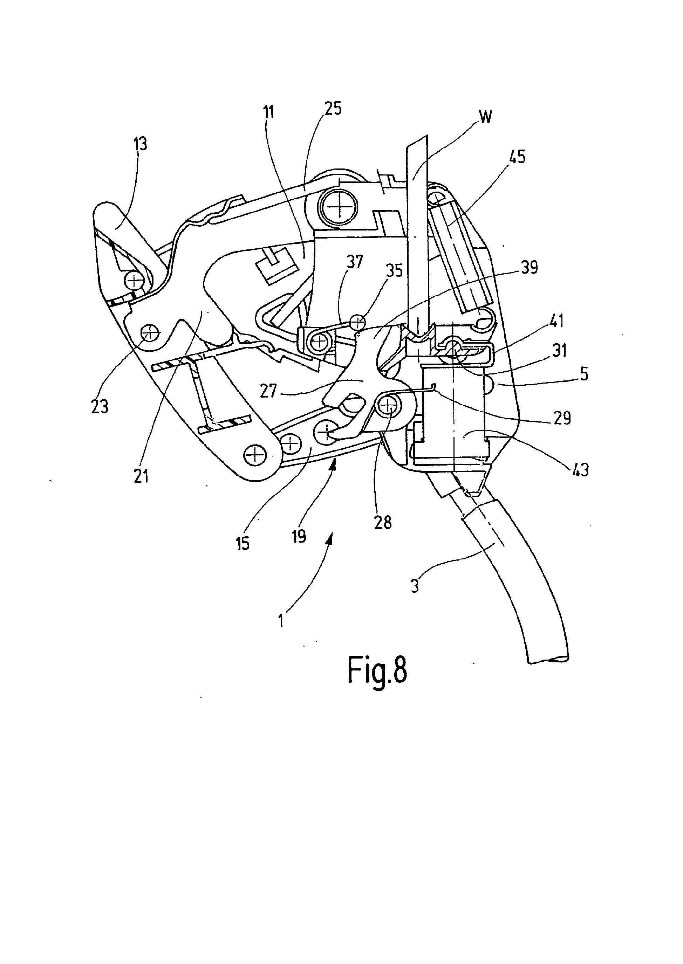

- Fig. 8: einen Schnitt entsprechend Fig. 6 beim Rücksetzen,

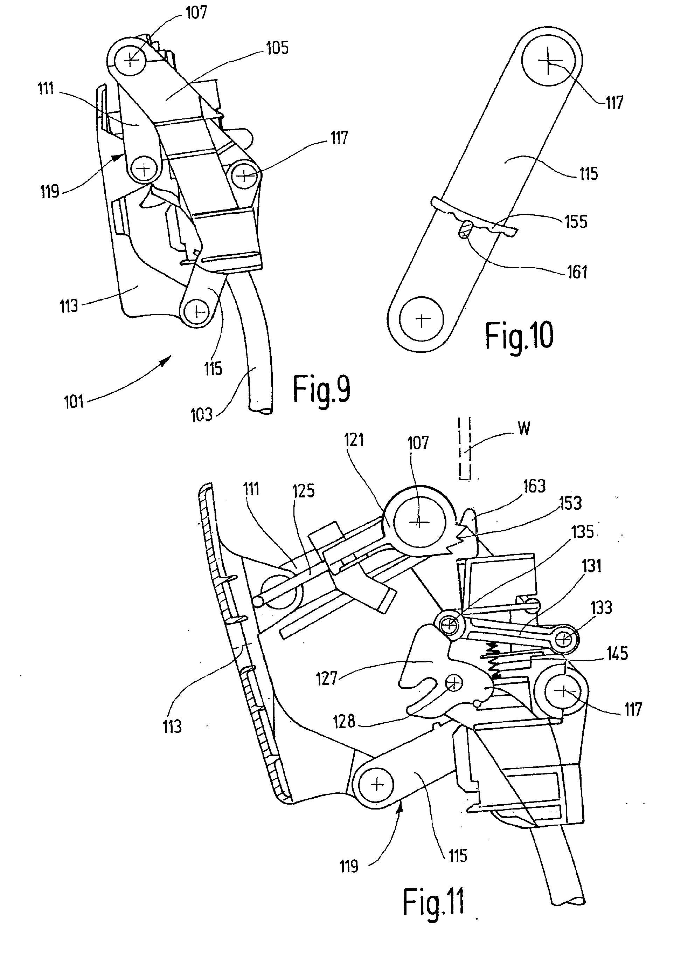

- Fig. 9: eine Seitenansicht des zweiten Ausführungsbeispiels in der Ausgangsstellung,
- Fig. 10: eine Ansicht der unteren Schwinge des zweiten Ausführungsbeispiels,
- Fig. 11: einen Schnitt durch das zweite Ausführungsbeispiel in der vordersten Crashstellung,
- Fig. 12: einen Schnitt durch die erste Variante des dritten Ausführungsbeispiels,
- Fig. 13: einen Schnitt durch die zweite Variante des dritten Ausführungsbeispiels,

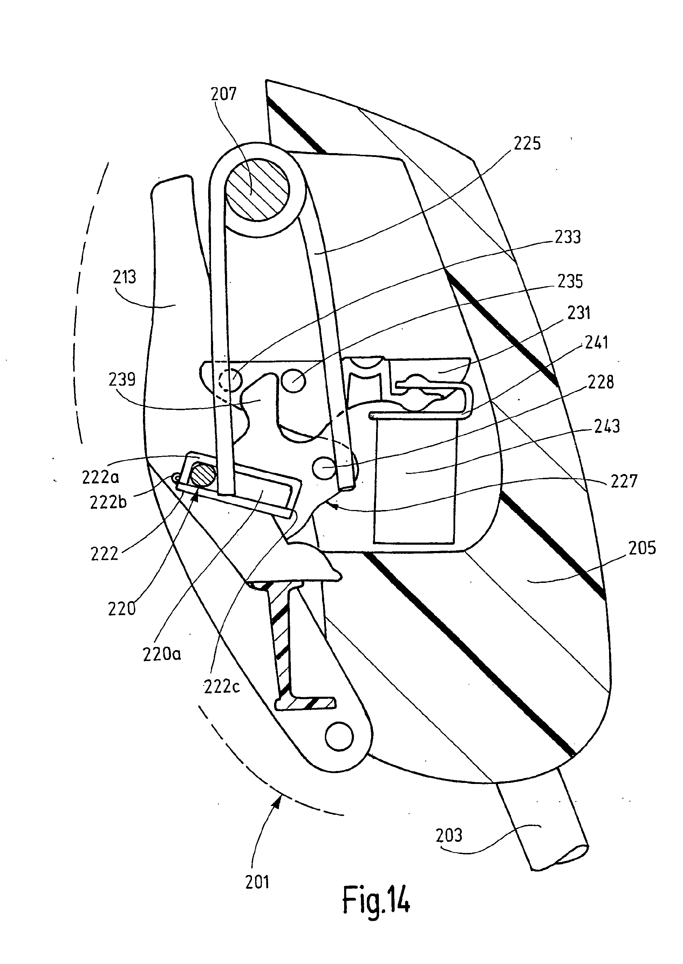

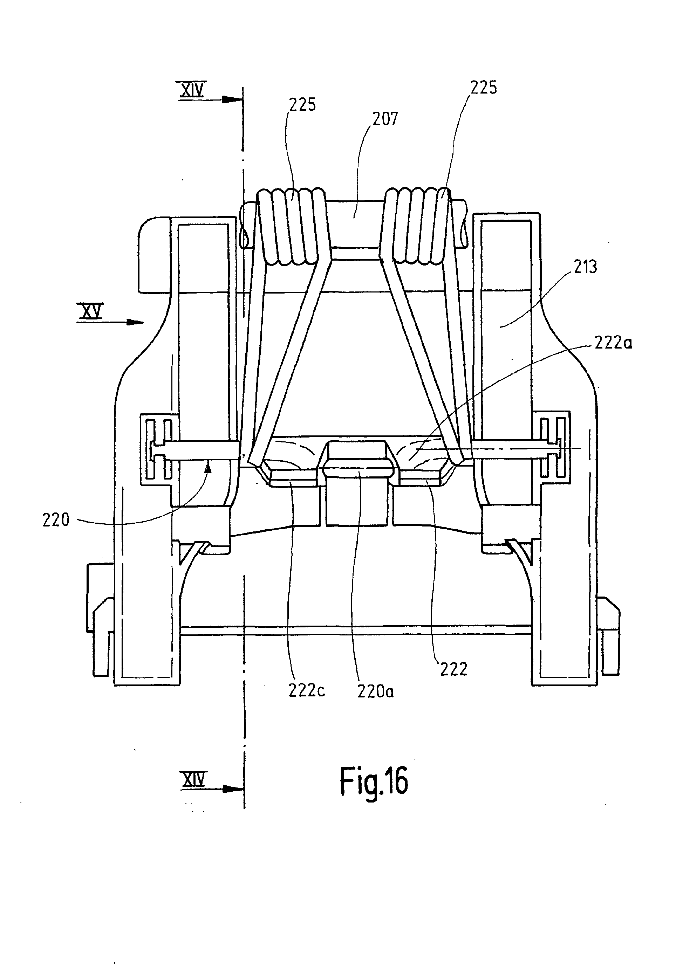

- Fig. 14: einen schematisierten Schnitt durch das vierte Ausführungsbeispiel entlang der Linie XIV-XIV in Fig. 16,

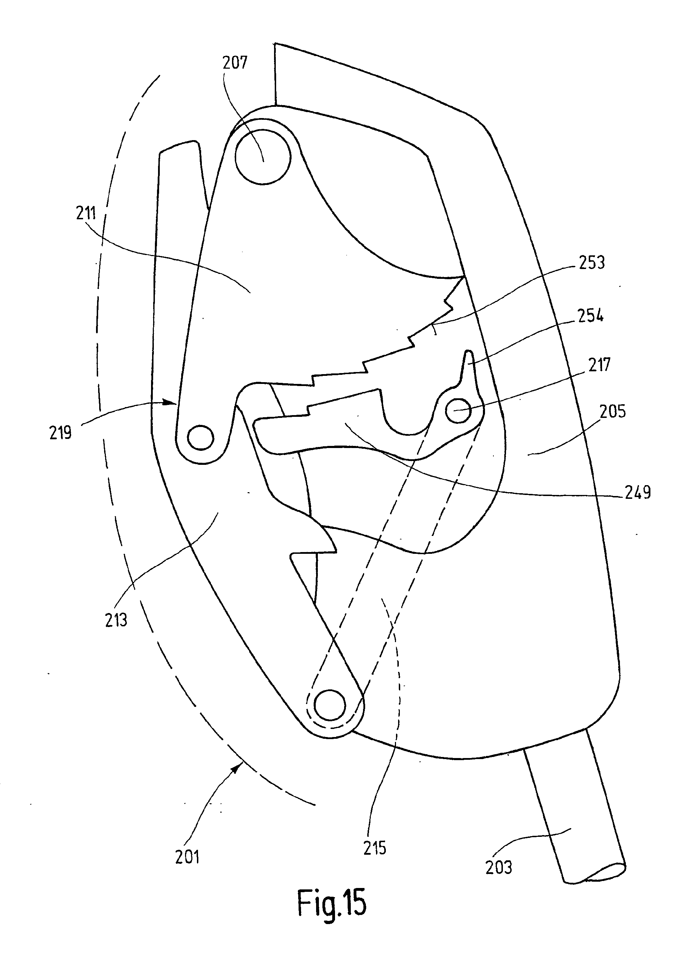

- Fig. 15: eine schematisierte Seitenansicht des vierten Ausführungsbeispiels mit Blick in Richtung des Pfeiles XV in Fig. 16,
- Fig. 16: eine Ansicht des Prallelementes und einiger damit verbundener Bauteile des vierten Ausführungsbeispiels von hinten,
- Fig. 17A: eine Ansicht der Klinke in einer ersten geöffneten Stellung, wobei das Halteelement in Anlage an die Anlaufschräge gelangt,

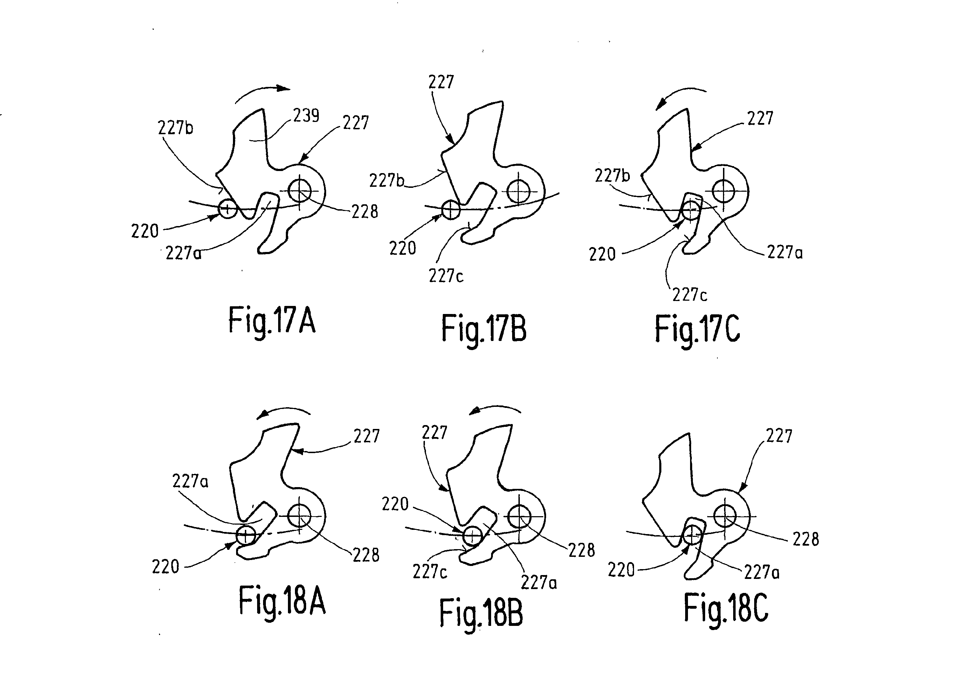

- Fig. 17B: eine Ansicht entsprechend Fig. 17A, wobei das Halteelement die Klinke im Uhrzeigersinn gedreht hat,
- Fig. 17C: eine Ansicht entsprechend Fig. 17A und Fig. 17B, wobei die Klinke gegen den Uhrzeigersinn in die schließende Stellung gedreht ist,
- Fig. 18A: eine Ansicht der Klinke in einer zweiten geöffneten Stellung, wobei das Halteelement in Anlage an die Lippe gelangt,
- Fig. 18B: eine Ansicht entsprechend Fig. 18A, wobei das Halteelement die Klinke gegen den Uhrzeigersinn gedreht hat, und
- Fig. 18C: eine Ansicht entsprechend Fig. 18A und Fig. 18B, wobei die Klinke weiter in die schließende Stellung gedreht ist.

Im ersten Ausführungsbeispiel ist eine Kopfstütze 1 für einen Fahrzeugsitz eines Kraftfahrzeuges vorgesehen. Die Kopfstütze 1 ist mittels zweier paralleler Kopfstützenstangen 3, die verschieblich in der Rückenlehne des Fahrzeugsitzes gehaltert sind, in ihrer Höhe einstellbar. Die Kopfstützenstangen 3 sind mit ihrem oberen Ende fest in einen quer zu den Kopfstützenstangen 3 angeordneten Träger 5 eingeführt. Am oberen Ende des Trägers 5 ist eine horizontal angeordnete, quer zu den Kopfstützenstangen 3 verlaufende Achse 7 im Träger 5 gelagert.

Auf der Achse 7 ist ein Paar oberer Schwingen 11 schwenkbar gelagert, welche voneinander beabstandet angeordnet sind und eine näherungsweise dreieckige Grundform aufweisen, wobei die Achse 7 in einer Ecke jeder oberen Schwinge 11 angeordnet ist. Die oberen Schwingen 11 weisen parallel zueinander nach vorne und nach unten. In der vordersten Ecke jeder oberen Schwinge 11 ist letztere am oberen Ende eines gemeinsamen Prallelements 13 angelenkt, welches in Fahrtrichtung vor dem Träger 5 angeordnet ist. Das Prallelement 13 besteht im wesentlichen aus zwei seitlich abgekröpften Schenkeln, welche miteinander durch zwei parallel zur Achse 7 verlaufende Quertraversen verbunden sind. Aus fertigungstechnischen Gründen kann das als Kunststoff-Spitzgußteil gefertigte Prallelement 13 aus zwei im wesentlichen spiegelbildlichen Hälften zusammengefügt sein. Auf dem Prallelement 13 ist ein Polsterteil angeordnet, wobei das Prallelement 13 zugleich der Polsterträger sein kann, d.h. das Polster direkt am Prallelement 13 befestigt sein kann.

Eine Paar unterer Schwingen 15 von länglicher Gestalt sind einerseits jeweils mittels eines horizontalen, zur Achse 7 parallelen Schwingenlagerbolzens 17 am Träger 5 und andererseits am unteren Ende des Prallelements 13 angelenkt. Der Träger 5, die obere Schwinge 11, das Prallelement 13 und die untere Schwinge 15 bilden jeweils ein Viergelenk 19. Dabei ist die untere Schwinge 15 länger als die obere Schwinge 11, so daß die obere Schwinge 11 und die untere Schwinge 15 nicht parallel sind. Zudem schwenken die obere Schwinge 11 und die zugehörige untere Schwinge 15 nicht in der gleichen Ebene, sondern sind entsprechend der Abkröpfung des Prallelementes 13 versetzt zueinander angeordnet.

Zwischen den beiden oberen Schwingen 11 ist ein Fangblech 21 mit seitlich eingebogenem Rand schwenkbar auf der Achse 7 gelagert, welches an dem von der Achse 7 abgewandten Ende einen parallel zur Achse 7 verlaufenden Haltebolzen 23 aufweist. Das in Fahrtrichtung hinter dem Prallelement 13 angeordnete Fangblech 21 deckt auf der vom Prallelement 13 abgewandten Seite eine Doppelschenkelfeder 25 ab, welche als Energiespeicher dient. Die Doppelschenkelfeder 25 beaufschlagt mit einem Mittelabschnitt das Fangblech 21, ist mit zwei seitlich anschließenden Wicklungsabschnitten schraubenförmig um die Achse 7 gewickelt und ist mit zwei Endabschnitten am Träger 5 abgestützt. Das Fangblech 21 wird gehalten durch eine Klinke 27, welche mit ihrem Klinkenmaul den Haltebolzen 23 aufnimmt. Die Klinke 27 ist auf einem zur Achse 7 parallelen Klinkenlagerbolzen 28 schwenkbar am Träger 5 gelagert und mittels einer gegenüber der Doppelschenkelfeder 25 schwachen Klinkenfeder 29 gegenüber dem Träger 5 in Öffnungsrichtung vorgespannt.

Ein in Fahrtrichtung nach hinten weisender Steuerhebel 31 ist auf einem zur Achse 7 parallelen Hebellagerbolzen 33 schwenkbar am Träger 5 oberhalb der Klinke 27 gelagert. Eine Rolle ist als ein Rundelement 35 vorgesehen, dessen Drehachse parallel zum Hebellagerbolzen 33 ausgerichtet ist. Das Rundelement 35 ist drehbar auf dem abgewinkelten Endabschnitt eines als Lagerarm dienenden Schenkels einer als Schenkelfeder ausgebildeten Haltefeder 37 gelagert. Die Haltefeder 37 ist auf dem Hebellagerbolzen 33 gelagert, wobei eine seitlich vorspringende Materialpartie des Steuerhebels 31 unterhalb des das Rundelement 35 lagernden Schenkels der Haltefeder 37 angeordnet ist. Um die Klinke 27 zu sperren, ist das Rundelement 35 in Öffnungsrichtung der Klinke 27 vor dieser, genauer gesagt vor einem Sperrarm 39 derselben, bzw. in inverser Betrachtungsweise in Schließrichtung hinter der Klinke 27 angeordnet, was aufgrund der Vorspannung im folgenden als eingeschnappt bezeichnet wird.

Am freien Ende des aus Kunststoff gefertigten Steuerhebels 31 ist seitlich eine metallische, von hinten aufgeclipste Haftplatte 41 angeordnet, welche im Normalfall von einem unterhalb des Steuerhebels 31 angeordneten Magnet 43 angezogen wird und an diesem stirnseitig anliegt. Eine als Zugfeder ausgebildete Auslösefeder 45, welche einerseits am Steuerhebel 31 und andererseits am oberen Ende des Trägers 5 eingehängt ist, spannt den Steuerhebel 31 in der vom Magneten 43 abgewandten Richtung, also nach oben, vor.

Seitlich bezüglich der Verbindungslinie zwischen Hebellagerbolzen 33 und Haftplatte 41 ist vom Steuerhebel 31 links und rechts abstehend je ein Ausleger 47 angeformt. Unterhalb des freien Endes jedes Auslegers 47 ist mit einem kleinen Abstand das freie Ende eines Crashsperrenarms 49 angeordnet, welcher drehbar auf dem Schwingenlagerbolzen 17 gelagert ist. Der als Crashsperrenteil dienende Crashsperrenarm 49 ist nach oben vorgespannt, wird aber im Normalfall durch das Fangblech 21 unten gehalten.

Der Crashsperrenarm 49 weist auf seiner Oberseite zwei Stufen einer Art Sägezahnverzahnung auf. Zum später beschriebenen Zusammenwirken der oberen Schwinge 11 mit dem Crashsperrenarm 49 weist die obere Schwinge 11 auf der von der Achse 7 entfernt liegenden, um die Achse 7 gekrümmten Seite eine entsprechende Sägezahnverzahnung als Crashsperrenverzahnung 53 auf. Zwischen der Crashsperrenverzahnung 53 und der Achse 7 ist an der äußeren Seite der oberen Schwinge 11 eine gezahnte Rastleiste 55 angeformt. Eine am Träger 5 befestigte, nach vorne weisende Rastzunge 57 aus Federblech weist an ihrem freien Ende eine Rastnase auf, mittels welcher sie mit der Rastleiste 55 im wesentlichen kraftschlüssig zusammenwirkt.

Im Normalfall kann eine Komforteinstellung der Kopfstütze 1 vorgenommen werden, d.h. das Prallelement 13 mit der darauf angebrachten, nicht näher dargestellten Polsterung kann vom Insassen mittels der Viergelenke 19 bewegt werden, wobei die verschiedenen, einnehmbaren Komfortstellungen durch das Zusammenwirken von Rastleiste 55 und Rastzunge 57 definiert und gesichert werden. Vorliegend sind drei Komfortstellungen vorgesehen. Die Bewegung des Prallelementes 13 nach vorne ist leichtgängig, während die Bewegung nach hinten etwas schwergängiger ist, um bei normaler Anlage des Kopfs keine Änderung der Einstellung vorzunehmen. Um die Bewegung nach vorne und nach hinten für die obere Schwinge 11 zu begrenzen, ist an der oberen Schwinge ein Anschlag angeformt, welcher nach vorne in Anlage an das Fangblech 21 und nach hinten an den Träger 5 gelangt. Während der Komforteinstellung bleibt das Fangblech 21 verriegelt, d.h. die Doppelschenkelfeder 25 gespannt. Nur in der hintersten Komfortstellung liegt das Fangblech 21 an dem Prallelement 13 an.

Im Falle eines Heckcrashs erhält der Magnet 43 einen Impuls und gibt die Haftplatte 41 frei. Die Auslösefeder 45 zieht nun den Steuerhebel 31 nach oben, wobei er die Haltefeder 37 samt Rundelement 35 mitnimmt. Dadurch wird die Klinke 27 freigegeben, so daß die sich entspannende Doppelschenkelfeder 25 das Fangblech 21 nach vorne drücken und zeitgleich über den Haltebolzen 23 die Klinke 27 öffnen kann. Damit ist die crashaktive Kopfstütze 1 ausgelöst. Das Fangblech 21 gelangt in Anlage an das Prallelement 13, welches unter Ausfahren der Viergelenke 19 nach vorne schnellt. Zugleich schwenken die vom Fangblech 21 freigegebenen Crashsperrenarme 49 aufgrund ihrer Federbelastung nach oben und gelangen in Anlage an die oberen Schwingen 11. Die Sägezahnverzahnungen der Crashsperrenarme 49 und der Crashsperrenverzahnungen 53 sind so ausgerichtet, daß die Bewegung der oberen Schwingen 11 nach vorne nicht behindert wird.

Eine Bewegung nach hinten würde aufgrund der Stufen in mehreren möglichen Stellungen gesperrt werden, welche nachfolgend als Crashstellungen bezeichnet sind. Sofern das Prallelement 13 keinen Widerstand erfährt, bewegt es sich in die vorderste mögliche Crashstellung. Gelangt dagegen das Prallelement 13 vorher in Anlage an den Kopf des Insassens, so sperren die Crashsperrenarme 49 und die Crashsperrenverzahnungen 53 in der am nächsten zurück gelegenen Crashstellung. Damit wird der Kopf des Insassens so weit vorne wie möglich abgestützt und dadurch so gering wie möglich belastet.

Die crashaktive Kopfstütze kann nach einem Crash rückgesetzt werden, d.h. reversibel in die Ausgangsstellung gebracht werden. Hierzu ist im Träger 5 und dessen Blende eine Öffnung vorgesehen, in welche ein als Werkzeug dienender, stabförmiger Rücksetzer W in Längsrichtung einführbar ist, und zwar vorliegend näherungsweise vertikal von oben. Da durch die Bewegung des Steuerhebels 31 die Entfernung der Haftplatte 41 zum Magneten 43 zu groß für ein automatisches Anziehen ist, wird der Rücksetzer W in eine Aufnahme 59 des Steuerhebels 31 eingeführt und durch die weitere Bewegung der Steuerhebel 31 entgegen der Kraft der Auslösefeder 45 nach unten gedrückt, bis die Haftplatte 41 vom Magneten 43 angezogen wird und an diesem haften bleibt. Mit der Bewegung des Steuerhebels 31 nach unten drücken dessen Ausleger 47 die Crashsperrenarme 49 nach unten, d.h. aus der Crashsperrenverzahnung 53. Der Steuerhebel 31 befindet sich nun in seiner Ausgangsstellung. In abgewandelter Ausführung ist der Rücksetzer W am Steuerhebel 31 angelenkt, wird im Crashfall nach oben gedrückt und ist dann sichtbar und für eine Betätigung bereit.

Durch manuellen Druck von vorne auf das Prallelement 13, vorzugsweise mit beiden Händen, kann nun das Prallelement 13 und damit das Fangblech 21 entgegen der Kraft der sich spannenden Doppelschenkelfeder 25 wieder nach hinten bewegt werden, zu ihrer aufnahmebereiten Verriegelung hin. Sobald der Haltebolzen 23 in Anlage an eine vorspringende Lippe der Klinke 27 gelangt, wird die Klinke 27 durch den Haltebolzen 23 in ihre Ausgangsstellung gedreht. Das am Sperrarm 39 der Klinke 27 auf deren oberer Seite anliegende und gegenüber der Ausgangsstellung etwas nach oben gedrückte Rundelement 35 rollt dabei am Rand des Sperrarmes 39 entlang ab. Sobald das Rundelement 35 zum Scheitel des Sperrarmes 39 gelangt, schnappt sie abwärts auf die hintere Seite des Sperrarmes 39, also auf die in Schließrichtung nacheilende Seite. Die Klinke 27 ist dadurch wieder gesperrt. Mit dem Zurückdrehen der Klinke 27 gelangt auch das Fangblech 21 in Anlage an die Crashsperrenarme 49 und schwenkt diese in ihre Ausgangsstellung zurück, wodurch der Steuerhebel 31 entlastet wird.

Das zweite Ausführungsbeispiel gleicht dem ersten Ausführungsbeispiel, soweit nachfolgend nicht abweichend beschrieben, weshalb gleiche und gleich wirkende Bauteile um 100 höhere Bezugszeichen tragen. Bei der Kopfstütze 101 ist auf den Kopfstützenstangen 103 wiederum der Träger 105 angebracht, welcher die horizontale Achse 107 drehbar lagert. Die oberen Schwingen 111 sind an der Achse 107 und an einem plattenförmigen Prallelement 113 angelenkt, während die längeren unteren Schwingen 115 einerseits ebenfalls am Prallelement 113 und andererseits mittels Schwingenlagerbolzen 117, welche parallel zur Achse 107 sind, am Träger 105 angelenkt sind, so daß auf jeder Seite der Kopfstütze 101 wieder ein Viergelenk 119 gebildet wird. Für die Komforteinstellung ist an den unteren Schwingen 115 je eine Rastleiste 155 angeformt, welche mit einer Rastnase 161 des Trägers 105 zusammenwirkt, so daß mehrere Komfortstellungen gesichert werden können. Die Einstellung selber erfolgt durch Zug an dem oder Druck auf das gepolsterte Prallelement 113.

Für den Crashfall ist als Energiespeicher eine Doppelschenkelfeder 125 um die Achse 107 gewickelt und am Träger 105 abgestützt. Eine auf der Achse 107 schwenkbar gelagerte Fangplatte 121 ist auf die Doppelschenkelfeder 125 aufgeclipst. Die vorgespannte Doppelschenkelfeder 125 wird von einer Klinke 127 gehalten, die auf einem Klinkenlagerbolzen 128 drehbar gelagert ist. Die in Öffnungsrichtung vorgespannte Klinke 127 wird von einem Rundelement 135 gesperrt, welches als Rolle drehbar an einem als Lagerarm dienenden Steuerhebel 131 gelagert ist. Der auf einem Hebellagerbolzen 133 schwenkbar gelagerte Steuerhebel 131 wird entgegen der Vorspannung einer als Druckfeder ausgebildeten Auslösefeder 145 von einem nicht näher dargestellten Magneten gehalten.

Im Falle eines Heckcrashs erhält der Magnet einen Impuls und gibt den Steuerhebel 131 frei, welcher nach oben schwenkt und das Rundelement 135 anhebt. Dadurch wird die Klinke 127 freigegeben, welche durch die Doppelschenkelfeder 125 geöffnet wird. Die sich entspannende Doppelschenkelfeder 125 treibt das Prallelement 113 nach vorne, d.h. die Viergelenke 119 werden bewegt und fahren aus. An der mitgenommenen Fangplatte 121 ist im Bereich der Achse 107 eine Crashsperrenverzahnung 153 vorgesehen, welche an einem mit einer Rastnase versehenen Rastblech 163 entlang gleitet. Das als Crashsperrenteil dienende Rastblech 163 ist wenigstens im Bereich der Rastnase beweglich ausgebildet und dafür ausgelegt, mit der Crashsperrenverzahnung 153 zu verrasten, wenn eine rückwärts gerichtete Kraft auf die Fangplatte 121 wirkt. Wenn das Prallelement 113 keinen Widerstand durch den entgegenkommenden Kopf des Insassens erfährt, verrastet die Kopfstütze 101 in der vordersten Crashstellung. Bei Kontakt mit dem Kopf erfolgt ein Verrasten in der nächstgelegenen Crashstellung in Rückwärtsrichtung.

Zum Rücksetzen der Kopfstütze 101 nach einem Crash wird ein stabförmiger Rücksetzer W ungefähr in vertikaler Richtung von oben her in die Kopfstütze 101 eingeführt, welches zunächst das Rastblech 163 beiseite schiebt, so daß die Fangplatte 121 freigegeben wird. Das Prallelement 113 kann nun nach hinten gedrückt werden, wobei die Doppelschenkelfeder 125 gespannt wird, bis sie von der Klinke 127 aufgenommen und gesperrt wird. Durch eine weitere Längsbewegung des Rücksetzers W kann dieses den Steuerhebel 131 unter Spannen der Auslösefeder 145 nach unten drücken, so daß das an der Klinke 127 abrollende Rundelement 135 die Klinke 127 sichern kann. Wenn der Magnet den Steuerhebel 131 wieder festhält, ist die Ausgangsstellung erreicht.

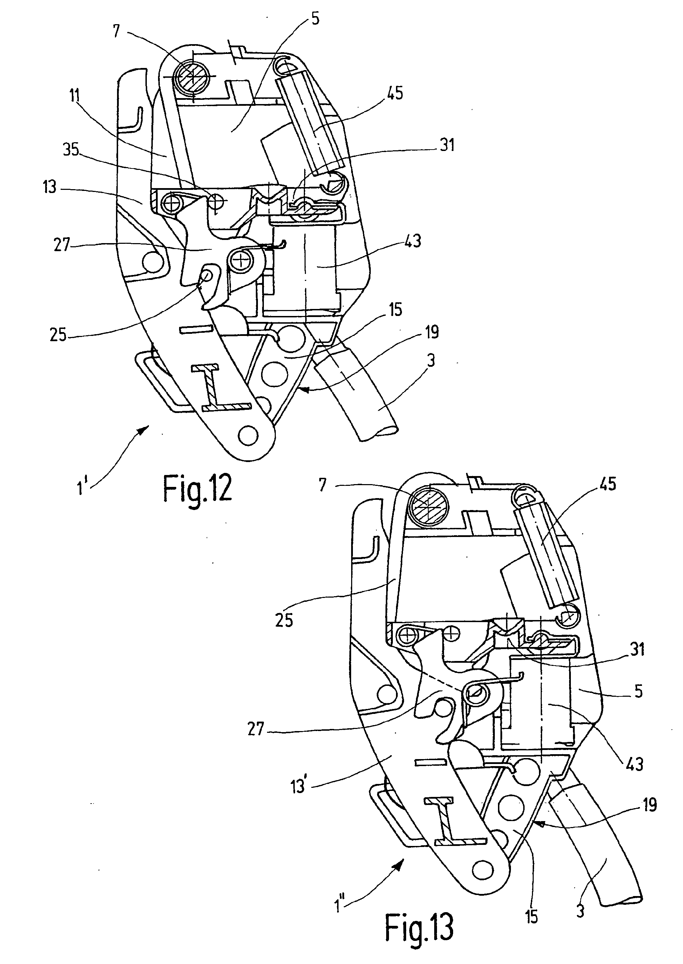

Das dritte Ausführungsbeispiel gleicht dem ersten Ausführungsbeispiel, soweit nachfolgend nicht anders beschrieben, weshalb gleiche Bauteile die gleichen Bezugszeichen tragen und modifizierte, aber gleichwirkende Bauteile durch Bezugszeichen mit Apostrophen bezeichnet sind. Bei dritten Ausführungsbeispiels handelt es sich um eine Variante ohne Komforteinstellung. Dadurch können mehrere Bauteile eingespart werden, insbesondere das Fangblech, weil die Doppelschenkelfeder 25 direkt auf das Prallelement 13 oder die oberen Schwingen 11 einwirken kann. In der Ausgangsstellung hält die Klinke 27 entweder die vorgespannte Doppelschenkelfeder 25, wie für die erste Kopfstützenvariante 1' in Fig. 12 gezeigt, oder das beaufschlagte Prallelement 13', wie für die zweite Kopfstützenvariante 1" in Fig. 13 dargestellt ist. Die Rastzunge - und entsprechend die Rastleiste - kann ebenfalls entfallen. Die Auslösung im Crashfall, das Sperren in einer möglichen Crashstellung und das Rücksetzen nach dem Crashfall entsprechen dem ersten Ausführungsbeispiel.

Das vierte Ausführungsbeispiel gleicht dem ersten Ausführungsbeispiel, sofern nachfolgend nicht anders beschrieben, weshalb gleiche und gleichwirkende Bauteile um 200 höhere Bezugszeichen tragen. Bei der Kopfstütze 201, welche wie das dritte Ausführungsbeispiel ohne Komforteinstellung ausgebildet ist, sind wiederum die beiden Kopfstützenstangen 203 in den Träger 205 eingeführt, welcher die Achse 207 lagert. Die auf der Achse 207 schwenkbare gelagerten oberen Schwingen 211 sind am oberen Ende des seitlich abgekröpften Prallelements 213 angelenkt, welches in Fahrtrichtung vor dem Träger 205 angeordnet ist. Die unteren Schwingen 215 sind einerseits jeweils mittels eines horizontalen, zur Achse 207 parallelen Schwingenlagerbolzens 217 am Träger 205 und andererseits am unteren Ende des Prallelements 213 angelenkt. Der Träger 205, die obere Schwinge 211, das Prallelement 213 und die untere Schwinge 215 bilden jeweils ein Viergelenk 219. Dabei ist die untere Schwinge 215 wiederum länger als die obere Schwinge 211, so daß die obere Schwinge 211 und die untere Schwinge 215 nicht parallel sind. Zudem schwenken die obere Schwinge 211 und die zugehörige untere Schwinge 215 nicht in der gleichen Ebene, sondern sind entsprechend der Abkröpfung des Prallelementes 213 versetzt zueinander angeordnet.

Am Prallelement 213 ist auf etwa halber Höhe ein im wesentlichen horizontal verlaufendes, metallisches Halteelement 220 angeordnet. Das bezüglich einer vertikalen Mittelebene spiegelsymmetrisch ausgebildete Halteelement 220 weist in seiner Mitte einen zu beiden Seiten hin abgekröpften Mittelbereich 220a auf, welcher in eine Aufnahme 222 des Prallelementes 213 formschlüssig eingelegt und durch einen Deckel 222a formschlüssig bedeckt wird. Der Deckel 222a ist mittels eines Filmscharniers 222b an der Aufnahme 222 angebracht und mittels einer Clipsverbindung 222c mit dieser lösbar verbunden. An seinen Enden ist das Halteelement 220 in das Prallelement 213 eingesteckt.

In Fahrtrichtung hinter dem Prallelement 213 sind zwei spiegelsymmetrische Doppelschenkelfedern, welche als Energiespeicher 225 dienen, schraubenförmig um die Achse 207 gewickelt, wobei sie mit jeweils einem Schenkel am Träger 205 abgestützt sind und mit dem anderen Schenkel das Halteelement 220 in einem Bereich seitlich des abgekröpften Mittelbereichs 220a beaufschlagen. Durch den Kontakt Metall auf Metall zwischen dem Energiespeicher 225 und dem Halteelement 220 sowie die weiträumige Einlagerung des Halteelements 220 in das Prallelement 213 erfolgt die Krafteinleitung in das Kunststoffmaterial des Prallelementes 13 mit einer geringen Flächenpressung. Das Halteelement 220 - damit das vom Energiespeicher 225 beaufschlagte Prallelement 213 - wird durch eine Klinke 227 gehalten, welche mit ihrem Klinkenmaul 227a den abgekröpften Mittelbereich 220a des Halteelementes 220 aufnimmt. Die Klinke 227 ist auf einem zur Achse 7 parallelen Klinkenlagerbolzen 228 schwenkbar am Träger 205 gelagert.

Ein in Fahrtrichtung nach hinten weisender Steuerhebel 231 ist auf einem zur Achse 207 parallelen Hebellagerbolzen 233 schwenkbar am Träger 205 oberhalb der Klinke 227 in einer Ebene seitlich von dieser gelagert. Ein fest mit dem Steuerhebel 231 verbundenes, von diesem parallel zum Hebellagerbolzen 233 abstehendes Rundelement 235 sperrt die Klinke 227. Hierzu ist das Rundelement 235 in Öffnungsrichtung der Klinke 227 vor dieser, genauer gesagt vor einem Sperrarm 239 derselben, bzw. in inverser Betrachtungsweise in Schließrichtung hinter der Klinke 227 angeordnet. Am freien Ende des aus Kunststoff gefertigten Steuerhebels 231 ist seitlich eine metallische, von hinten aufgeclipste Haftplatte 241 angeordnet, welche im Normalfall von einem unterhalb des Steuerhebels 231 angeordneten Magnet 243, der aus einem Permanentmagneten und einem im Normalfall unbestromten Elektromagneten umgekehrter Polung besteht, angezogen wird und an diesem stirnseitig anliegt.

In der Ebene der oberen Schwingen 211 ist auf jedem Schwingenlagerbolzen 217 je ein Crashsperrenarm 249 drehbar gelagert. Der Crashsperrenarm 249 weist auf seiner Oberseite zwei Stufen einer Art Sägezahnverzahnung auf. Zum später beschriebenen Zusammenwirken der oberen Schwinge 211 mit dem Crashsperrenarm 249 weist die obere Schwinge 211 auf der von der Achse 207 entfernt liegenden, um die Achse 207 gekrümmten Seite eine entsprechende Sägezahnverzahnung als Crashsperrenverzahnung 253 auf. Im Bereich des Schwingenlagerbolzens 217 ist am Crashsperrenarm 249 eine Drucktaste 254 angeformt.

Im Falle eines Heckcrashs erhält der Magnet 243 einen Impuls und gibt die Haftplatte 241 frei. Der Steuerhebel 231 schwenkt nach oben, wodurch sich das Rundelement 235 von der Klinke 227 entfernt. Dadurch wird die Klinke 227 freigegeben, so daß der sich entspannende Energiespeicher 225 mittels des Halteelementes 220 die Klinke 227 öffnen kann, womit die crashaktive Kopfstütze 1 ausgelöst ist, und zugleich das Prallelement 213 unter Ausfahren der Viergelenke 219 nach vorne schnellen läßt. Zugleich schwenken die Crashsperrenarme 249 nach oben und gelangen in Anlage an die oberen Schwingen 211. Die Sägezahnverzahnungen der Crashsperrenarme 249 und der Crashsperrenverzahnungen 253 sind so ausgerichtet, daß die Bewegung der oberen Schwingen 211 nach vorne nicht behindert wird.

Eine Bewegung nach hinten würde aufgrund der Stufen in mehreren möglichen Stellungen gesperrt werden, welche nachfolgend als Crashstellungen bezeichnet sind. Sofern das Prallelement 213 keinen Widerstand erfährt, bewegt es sich in die vorderste mögliche Crashstellung. Gelangt dagegen das Prallelement 213 vorher in Anlage an den Kopf des Insassens, so sperren die Crashsperrenarme 249 und die Crashsperrenverzahnungen 253 in der am nächsten zurück gelegenen Crashstellung. Damit wird der Kopf des Insassens so weit vorne wie möglich abgestützt und dadurch so gering wie möglich belastet.

Die crashaktive Kopfstütze 201 kann nach einem Crash zurückgesetzt werden, d.h. reversibel in die Ausgangsstellung gebracht werden. Für diesen Reset können mittels der Drucktasten 254 die Crashsperrenarme 249 aus den Crashsperrenverzahnungen 253 geschwenkt werden. Durch manuellen Druck von vorne auf das Prallelement 213, vorzugsweise mit beiden Händen, kann nun das Prallelement 213 entgegen der Kraft der sich spannenden Energiespeicher 225 wieder nach hinten bewegt werden.

Die Klinke 227 ist vorliegend so ausgelegt, daß sie in jeder ihrer möglichen Stellungen selbstanhebend ist, d.h. geöffnet ist oder mittels des anlaufenden Halteelementes 220 öffnet, das Halteelement 220 - genauer dessen abgekröpften Mittelbereich 220a - aufnimmt und wieder schließt. In der Zeichnung sind zwei solche geöffneten Stellungen dargestellt, in denen die Klinke 227 aufnahmebereit für das Halteelement 220 ist. Wenn das Klinkenmaul 227a nach unten weist, gelangt das Halteelement 220 in Anlage an eine Anlaufschräge 227b, wodurch die Klinke 227 sich in der Zeichnung im Uhrzeigersinn dreht. Sobald das Halteelement 220 in Anlage an das Klinkenmaul 227a oder an eine vorspringende Lippe 227c desselben gelangt, wird die Klinke 227 in umgekehrter Drehrichtung zurück in ihre schließende Ausgangsstellung gedreht, in der sie das Halteelement 220 hält. Wenn hingegen das Klinkenmaul 227a nach vorne weist, gelangt das Halteelement 220 direkt in Anlage an die Lippe 227c. Bei der weiteren Bewegung dreht sich die Klinke 227 in der Zeichnung entgegen dem Uhrzeigersinn in ihre Ausgangsstellung. Der Steuerhebel 231 wird beispielsweise mittels eines stabförmigen Rücksetzers W nach unten gedrückt, bis die Haftplatte 241 vom Magneten 243 angezogen wird und an diesem haften bleibt. Die Klinke 227 wird wieder durch das Rundelement 235 des Steuerhebels 231 gesperrt.

### Bezugszeichenliste

- 1, 1', 1", 101, 201: Kopfstütze
- 3, 103, 203: Kopfstützenstange
- 5, 105, 205: Träger
- 7, 107, 207: Achse
- 11,111,211: obere Schwinge
- 13, 13', 113, 213: Prallelement
- 15,115,215: untere Schwinge
- 17, 117, 217: Schwingenlagerbolzen
- 19; 119, 219: Viergelenk
- 21, 121: Fangblech, Fangplatte
- 23: Haltebolzen
- 25, 125, 225: Doppelschenkelfeder, Energiespeicher
- 27, 127, 227: Klinke
- 28, 128, 228: Klinkenlagerbolzen
- 29: Klinkenfeder
- 31, 131,231: Steuerhebel
- 33, 133, 233: Hebellagerbolzen
- 35, 135, 235: Rundelement
- 37: Haltefeder
- 39, 239: Sperrarm
- 41, 241: Haftplatte
- 43, 243: Magnet
- 45, 145: Auslösefeder
- 47: Ausleger
- 49, 249: Crashsperrenarm, Crashsperrenteil
- 53, 153, 253: Crashsperrenverzahnung
- 55,155: Rastleiste
- 57: Rastzunge
- 59: Aufnahme
- 161: Rastnase
- 163: Rastblech, Crashsperrenteil
- 220: Halteelement
- 220a: abgekröpfter Bereich
- 222: Aufnahme
- 222a: Deckel
- 222b: Filmscharnier
- 222c: Clipsverbindung
- 227a: Klinkenmaul
- 227b: Anlaufschräge
- 227c: Lippe
- 254: Drucktaste
- W: Rücksetzer

## Patentansprüche

1. Kopfstütze für einen Fahrzeugsitz, mit einem Träger (5; 105; 205), wenigstens je einer am Träger (5; 105; 205) angelenkten oberen und unteren Schwinge (11, 15; 111, 115; 211, 215), welche um horizontale Achsen (7, 17; 107, 117; 207, 217) schwenkbar sind, einem an den Schwingen (11, 15; 111, 115; 211, 215) angelenkten Prallelement (13; 13'; 113; 213), welches mit den Schwingen (11, 15; 111, 115; 211, 215) und dem Träger (5; 105; 205) wenigstens ein Viergelenk (19; 119; 219) bildet, und einem Energiespeicher (25; 125; 225), der als gespannte Feder ausgebildet ist, wobei im Crashfall der Energiespeicher (25; 125; 225) das Viergelenk (19; 119; 219) antreibt, so dass das Prallelement (13; 13'; 113; 213) aus einer Ausgangsstellung heraus nach vorne in eine durch eine Crashsperre (49, 53; 153, 163; 249, 253) nach hinten gesperrte Crashstellung ausfährt, **dadurch gekennzeichnet, dass** die obere Schwinge (11; 111; 211) und die untere Schwinge (15; 115; 215) eine von der Parallelität abweichende Ausrichtung zueinander einnehmen.

2. Kopfstütze nach Anspruch 1, **dadurch gekennzeichnet, dass** die untere Schwinge (15; 115; 215) und die obere Schwinge (11; 111; 211) unterschiedliche Längen aufweisen, insbesondere dass die untere Schwinge (15; 115; 215) länger als die obere Schwinge (11; 111; 211) ist.

3. Kopfstütze nach Anspruch 1 oder 2, **dadurch gekennzeichnet, dass** die Kopfstütze (1; 1'; 1"; 101; 201) nach einem Crash durch Lösen der Crashsperre (49, 53; 153, 163; 249, 253) reversibel rücksetzbar ist.

4. Kopfstütze nach Anspruch 3, **dadurch gekennzeichnet, dass** nach einem Crash ein Rücksetzer (W; 254) betätigbar ist, welcher die Crashsperre (49, 53; 153, 163; 249, 253) in die Ausgangsposition bringt, wobei als Rücksetzer (W) insbesondere ein in seiner Längsrichtung in die Kopfstütze (1; 1'; 1"; 101; 201) einführbares Werkzeug oder eine Drucktaste (254) an einem beweglichen Crashsperrenteil (49; 249) der Crashsperre (49, 53; 153, 163; 249, 253) vorgesehen ist.

5. Kopfstütze nach einem der Ansprüche 1 bis 4, **dadurch gekennzeichnet, dass** eine schwenkbare Klinke (27; 127; 227) vorgesehen ist, welche in der Ausgangsstellung die Feder (25; 125; 225) wenigstens indirekt hält.

6. Kopfstütze nach Anspruch 5, **dadurch gekennzeichnet, dass** ein beweglich gelagertes Rundelement (35; 135; 235) vorgesehen ist, welches in der Ausgangsstellung die Klinke (27; 127; 227) hält, insbesondere in der Ausgangsstellung auf der in Schließrichtung der Klinke (27; 127; 227) nacheilenden Seite der Klinke (27; 127; 227) eingeschnappt oder angeordnet ist, wobei das Rundelement (35; 135; 235) vorzugsweise auf einem beweglichen Lagerarm gelagert ist.

7. Kopfstütze nach Anspruch 6, **dadurch gekennzeichnet, dass** am Träger (5; 105; 205) ein vorzugsweise vorgespannter Steuerhebel (31; 131; 231) angelenkt ist, welcher im Crashfall das Rundelement (35; 135; 235) bewegt, wobei insbesondere der Steuerhebel (31; 131; 231) mit dem Lagerarm des Rundelementes (35; 135; 235) auf Mitnahme gekoppelt ist oder selbst den Lagerarm bildet.

8. Kopfstütze nach Anspruch 4 und 7, **dadurch gekennzeichnet, dass** beim Rücksetzen der Kopfstütze (1; 1'; 1"; 201) der Rücksetzer (W) am Steuerhebel (31; 131; 231) angreift und diesen in seine Ausgangsstellung bringt, wonach das Prallelement (13; 13'; 113; 213) einfahrbar und die Feder (25; 125; 225) wieder durch die Klinke (27; 127; 227) wenigstens indirekt verriegelbar ist.

9. Kopfstütze nach Anspruch 8, **dadurch gekennzeichnet, dass** beim Rücksetzen der Kopfstütze (1; 1'; 1"; 201) der Rücksetzer (W) den von ihm bewegten Steuerhebel (31; 231) zu einem Magneten (43; 243) bringt, welcher in der Ausgangsstellung den Steuerhebel (31; 131; 231) hält.

10. Kopfstütze nach Anspruch 8 oder 9, **dadurch gekennzeichnet, dass** der vom Rücksetzer (W) bewegte Steuerhebel (31; 131) die Crashsperre (49, 53; 153, 163) löst.

11. Kopfstütze nach einem der Ansprüche 5 bis 10, **dadurch gekennzeichnet, dass** ein schwenkbar gelagertes Fangblech (21) vorgesehen ist, welches von der Feder (25) beaufschlagt und von der Klinke (27) gehalten wird.

12. Kopfstütze nach einem der Ansprüche 1 bis 11, **dadurch gekennzeichnet, dass** die Kopfstütze (1; 1'; 1"; 101) im Normalgebrauch aus der Ausgangsstellung heraus in wenigstens eine weitere Komfortstellung überführbar ist.

13. Kopfstütze nach einem der Ansprüche 1 bis 12, **dadurch gekennzeichnet, dass** mehrere Crashstellungen vorgesehen sind, die durch die Crashsperre (49, 53; 153, 163) jeweils nach hinten sperrbar sind.

14. Kopfstütze nach einem der Ansprüche 1 bis 13, **dadurch gekennzeichnet, dass** das Prallelement (213) ein Halteelement (220) aufweist und dass eine schwenkbare, unbelastete Klinke (227) in einer schließenden Stellung das Halteelement (220) hält, im Crashfall freigibt und nach dem Crashfall für einen Reset der Kopfstütze (201) in jeder ihrer möglichen Stellungen für das Halteelement (220) aufnahmebereit ist.

15. Kopfstütze nach Anspruch 14, **dadurch gekennzeichnet, dass** die Klinke (227) eine Anlaufschräge (227b) aufweist, an welche das anlaufende Halteelement (220) in wenigstens einer Stellung der Klinke (227) in Anlage gelangt.

16. Kopfstütze nach Anspruch 14 oder 15, **dadurch gekennzeichnet, dass** die Klinke (227) ein Klinkenmaul (227a) mit einer Lippe (227c) aufweist, an welche das anlaufende Halteelement (220) in wenigstens einer Stellung der Klinke (227) in Anlage gelangt.

17. Kopfstütze nach einem der Ansprüche 14 bis 16, **dadurch gekennzeichnet, dass** das Halteelement (220) weiträumig in das Prallelement (213) eingelagert ist, wobei insbesondere das Prallelement (213) eine Aufnahme (222) für das Halteelement (220) aufweist, welche durch einen Deckel (222a) schließbar ist, wobei das Halteelement (220) vorzugsweise einen abgekröpften Mittelbereich (220a) aufweist, welcher in die Aufnahme (222) eingelegt ist und welchen die Klinke (227) hält.

18. Kopfstütze nach einem der Ansprüche 14 bis 17, **dadurch gekennzeichnet, dass** der Energiespeicher (225) das Halteelement (220) direkt beaufschlagt.

## Claims

1. Headrest for a vehicle seat, having a carrier (5; 105; 205), at least one upper and lower linkage (11, 15; 111, 115; 211, 215) linked to the carrier (5; 105; 205), which can be swiveled around horizontal axles (7, 17; 107, 117; 207, 217), a baffle element (13; 13'; 113; 213) linked to the linkages (11, 15; 111, 115; 211, 215), which forms at least one quadruple joint (19; 119; 219) with the linkages (11, 15; 111, 115; 211, 215) and the carrier (5; 105; 205), and an energy storage device (25; 125; 225) being realized by a loaded spring, wherein the energy storage device (25; 125; 225) drives the quadruple joint (19; 119; 219) in the event of a crash, so that the baffle element (13; 13'; 113; 213) comes out forward from an initial position into a crash position that is locked against a backward movement by a crash lock (49, 53; 153, 163; 249, 253), **characterized in that** the upper linkage (11; 111; 211) and the lower linkage (15; 115; 215) are aligned with one another in deviation from the parallel arrangement.

2. Headrest according to Claim 1, **characterized in that** the lower linkage (15; 115; 215) and the upper linkage (11; 111; 211) are different in length, particularly that the lower linkage (15; 115; 215) is longer than the upper linkage (11; 111; 211).

3. Headrest according to Claim 1 or 2, **characterized in that** the headrest (1; 1'; 1"; 101; 201) can be reset to the initial position after a crash by releasing the crash lock (49, 53; 153, 163; 249, 253).

4. Headrest according to Claim 3, **characterized in that** after a crash one can activate a resetting device (W; 254) that brings the crash lock (49, 53; 153, 163; 249, 253) back in its initial position, the resetting device (W) being in particular a tool that can be inserted lengthwise into the headrest (1; 1'; 1"; 101; 201), or a button (254) on a movable crash lock part (49; 249) of the crash lock (49, 53; 153, 163; 249, 253).

5. Headrest according to one of Claims 1 to 4, **characterized in that** there is a pivotable pawl (27; 127; 227) that holds the spring (25; 125; 225), at least indirectly, in its ini - tial position.

6. Headrest according to Claim 5, **characterized in that** there is a movably beared round element (35; 135; 235) holding the pawl (27; 127; 227) in its initial position, particularly being snapped on or arranged, in the initial position, on the side of the pawl (27; 127; 227) facing away from the closing direction of the pawl (27; 127; 227), the round element being preferably (35; 135; 235) beared on a movable bearing arm.

7. Headrest according to Claim 6, **characterized in that** a preferably preloaded control lever (31; 131; 231) is linked to the carrier (5; 105; 205), said lever, in the event of a crash, moving the round element (35; 135; 235), particularly the control lever (31; 131; 231) being coupled with the bearing arm of the round element (35; 135; 235) to carry it along or being itself the bearing arm.

8. Headrest according to Claims 4 and 7, **characterized in that** when resetting the headrest (1; 1'; 1"; 201), the resetting device (W) seizes the control lever (31; 131; 231), bring - ing said lever back into its initial position, following which the baffle element (13; 13'; 113; 213) can be pulled back in and the spring (25; 125; 225) can be locked again, at least indirectly, by means of the pawl (27; 127; 227).

9. Headrest according to Claim 8, **characterized in that** when resetting the headrest (1; 1'; 1"; 201), the resetting device (W) brings the control lever (31; 231) it has moved, to a magnet (43; 243) holding the control lever (31; 131; 231) in its initial position.

10. Headrest according to Claims 8 or 9, **characterized in that** the control lever (31; 131) moved by the resetting device (W) releases the crash lock (49, 53; 153, 163).

11. Headrest according to one of Claims 5 to 10, **characterized in that** there is a pivotably beared restraint sheet (21) on which the spring (25) is loading and which is retained by the pawl (27).

12. Headrest according to one of Claims 1 to 11, **characterized in that** in normal use the headrest (1; 1'; 1"; 101) can be brought from its initial position to at least one other comfort position.

13. Headrest according to one of Claims 1 to 12, **characterized in that** there are several crash positions which can be individually locked against a backward move by means of the crash lock (49, 53; 153, 163).

14. Headrest according to one of Claims 1 to 13, **characterized in that** the baffle element (213) has a restraint element (220) and that a pivotable, non-loaded pawl (227) in a locking position holds the restraint element (220), releases it in the event of a crash, and is available, after a crash has occurred, to receive the restraint element (220) for resetting the headrest (201) in any of its possible positions.

15. Headrest according to Claim 14, **characterized in that** the pawl (227) has a chamfer (227b), against which the arriving restraint element (220) comes to bear in at least one position of the pawl (227).

16. Headrest according to Claim 14 or 15, **characterized in that** the pawl (227) has a pawl jaw (227a) with a lip (227c) against which the arriving restraint element (220) comes to bear in at least one position of the pawl (227).

17. Headrest according to one of Claims 14 to 16, **characterized in that** the restraint element (220) is embedded in the baffle element (213) over a large surface, particularly the baffle element (213) having a receptor (222) for the restraint element (220), the receptor being able to be closed with a lid (222a), the restraint element (220) preferably having a cranked middle section (220a) that is embedded in the receptor (222) and held in place by the pawl (227).

18. Headrest according to one of Claims 14 to 17, **characterized in that** the energy storage device (225) directly bears on the restraint element (220).

## Revendications

1. - Appui-tête pour un siège de véhicule, comportant un support (5 ; 105 ; 205), au moins une coulisse supérieure et une coulisse inférieure (11, 15 ; 111, 115 ; 211, 215) articulées sur le support (5 ; 105 ; 205), lesquelles coulisses sont aptes à pivoter autour d'axes horizontaux (7, 17 ; 107, 117 ; 207, 217), un élément de choc (13 ; 13' ; 113 ; 213) articulé sur les coulisses (11, 15 ; 111, 115 ; 211, 215), lequel élément de choc forme avec les coulisses (11, 15 ; 111, 115 ; 211, 215) et le support (5 ; 105 ; 205) au moins une articulation à quatre points (19 ; 119 ; 219), et un réservoir d'énergie (25 ; 125 ; 225), qui est réalisé sous la forme d'un ressort tendu, à l'occasion de quoi, en cas d'accident, le réservoir d'énergie (25 ; 125 ; 225) actionne l'articulation à quatre points (19; 119; 219) de telle sorte que l'élément de choc (13 ; 13' ; 113; 213) se déplace vers l'avant à partir d'une position de sortie dans une position de choc bloquée à l'arrière par un dispositif de blocage en cas de choc (49, 53 ; 153 ; 163 ; 249, 253), **caractérisé par le fait que** la coulisse supérieure (11 ; 111 ; 211) et la coulisse inférieure (15 ; 115 ; 215) prennent l'une par rapport à l'autre une orientation s'écartant du parallélisme.

2. - Appui-tête selon la revendication 1, **caractérisé par le fait que** la coulisse inférieure (15 ; 115 ; 215) et la coulisse supérieure (11 ; 111 ; 211) présentent des longueurs différentes, en particulier que la coulisse inférieure (15 ; 115 ; 215) est plus longue que la coulisse supérieure (11 ; 111 ; 211).

3. - Appui-tête selon l'une des revendications 1 ou 2, **caractérisé par le fait que** l'appui-tête (1 ; 1'; 1"; 101 ; 201) est apte à être remis à l'état initial de façon réversible après un accident par déblocage du dispositif de blocage en cas de choc (49, 53 ; 153, 163 ; 249, 253).

4. - Appui-tête selon la revendication 3, **caractérisé par le fait qu'**après un accident, un organe de remise à l'état initial (W ; 254) est actionnable, lequel amène le dispositif de blocage en cas de choc (49, 53 ; 153, 163 ; 249, 253) dans la position de sortie, à l'occasion de quoi, comme organe de remise à l'état initial (W) est prévu en particulier un organe pouvant être introduit dans le sens de sa longueur dans l'appui-tête (1 ; 1'; 1"; 101 ; 201) ou un bouton-poussoir (254) sur une partie mobile (49 ; 249) du dispositif de blocage en cas de choc (49, 53 ; 153, 163; 249, 253).

5. - Appui-tête selon l'une des revendications 1 à 4, **caractérisé par le fait qu'**un cliquet basculable (27 ; 127 ; 227) est prévu, lequel maintient au moins indirectement le ressort (25; 125; 225) dans la position de sortie.

6. - Appui-tête selon la revendication 5, **caractérisé par le fait qu'**un élément arrondi (35 ; 135 ; 235) monté de façon mobile est prévu, lequel maintient le cliquet (27 ; 127 ; 227) dans la position de sortie, en particulier est encliqueté ou disposé dans la position de sortie sur le côté du cliquet (27 ; 127; 227) en retard en direction de fermeture du cliquet (27; 127; 227), à l'occasion de quoi l'élément arrondi (35; 135; 235) est monté de préférence sur un bras de support mobile.

7. - Appui-tête selon la revendication 6, **caractérisé par le fait que**, sur le support (5 ; 105 ; 205) est articulé un levier de commande (31; 131; 231) de préférence pré-tendu, lequel déplace en cas d'accident l'élément arrondi (35 ; 135 ; 235), à l'occasion de quoi en particulier le levier de commande (31; 131; 231) est couplé avec le bras de support de l'élément arrondi (35; 135 ; 235) sur entraînement ou forme lui-même le bras de support.

8. - Appui-tête selon les revendications 4 et 7, **caractérisé par le fait qu'**en cas de remise à l'état initial de l'appui-tête (1 ; 1'; 1"; 201), le dispositif de remise à l'état initial (W) engrène sur le levier de commande (31 ; 131 ; 231) et amène celui-ci dans sa position de sortie, après quoi l'élément de choc (13 ; 13' ; 113 ; 213) est apte à être rentré et le ressort (25 ; 125 ; 225) est à nouveau verrouillable au moins indirectement par le cliquet (27; 127 ; 227).

9. - Appui-tête selon la revendication 8, **caractérisé par le fait qu'**en cas de remise à l'état initial de l'appui-tête (1 ; 1'; 1"; 201), le dispositif de remise à l'état initial (W) amène le levier de commande (31 ; 131 ; 231) déplacé par lui à un aimant (43; 243), lequel maintient le levier de commande (31 ; 131; 231) dans la position de sortie.

10. - Appui-tête selon l'une des revendications 8 ou 9, **caractérisé par le fait que** le levier de commande (31; 131) déplacé par le dispositif de remise à l'état initial (W) détache le dispositif de blocage en cas de choc (49, 53 ; 153; 163).

11. - Appui-tête selon l'une des revendications 5 à 10, **caractérisé par le fait qu'**une tôle d'arrêt (21) montée de façon pivotante est prévue, laquelle est attaquée par le ressort (25) et est maintenue par le cliquet (27).

12. - Appui-tête selon l'une des revendications 1 à 11, **caractérisé par le fait que** l'appui-tête (1 ; 1' ; 1" ; 101) est apte à être transféré dans l'utilisation normale à partir de la position de sortie dans au moins une autre position de confort.

13. - Appui-tête selon l'une des revendications 1 à 12, **caractérisé par le fait que** plusieurs positions d'accident sont prévues, qui sont verrouillables à chaque fois vers l'arrière par le dispositif de blocage en cas de choc (49, 53 ; 153, 163).

14. - Appui-tête selon l'une des revendications 1 à 13, **caractérisé par le fait que** l'élément de choc (213) présente un élément d'arrêt (220) et qu'un cliquet (227) non chargé, apte à pivoter, maintient l'élément d'arrêt (220) dans une position de fermeture, se libère en cas d'accident et après l'accident est prêt en réception pour l'élément d'arrêt (220) pour une remise à l'état initial de l'appui-tête (201) dans chacune de ses positions possibles.

15. - Appui-tête selon la revendication 14, **caractérisé par le fait que** le cliquet (227) présente une surface inclinée de démarrage (227b), sur laquelle l'élément d'arrêt en démarrage vient en appui dans au moins une position du cliquet (227).

16. - Appui-tête selon l'une des revendications 14 ou 15, **caractérisé par le fait que** le cliquet (227) présente une mâchoire de cliquet (227a) avec une lèvre (227c), sur laquelle l'élément d'arrêt (220) en démarrage vient en appui dans au moins une position du cliquet (227).

17. - Appui-tête selon l'une des revendications 14 à 16, **caractérisé par le fait que** l'élément d'arrêt (220) est monté à large espacement dans l'élément de choc (213), à l'occasion de quoi l'élément de choc (213) présente un logement (222) pour l'élément d'arrêt (220), lequel est apte à être fermé par un couvercle (222a), à l'occasion de quoi l'élément d'arrêt (220) présente de préférence une zone moyenne (220a) repliée, laquelle est introduite dans le logement (222) et que maintient le cliquet (227).

18. - Appui-tête selon l'une des revendications 14 à 17, **caractérisé par le fait que** le réservoir d'énergie (225) attaque directement l'élément d'arrêt (220).
